# EUROPEAN PATENT APPLICATION

(11) **EP 0 804 880 A1**
(43) Date of publication of application: **05.11.1997**
(21) Application number: 97302798.0
(22) Date of filing: 24.04.1997
(51) Int. Cl.: A23B 4/16

(54) **Curing meat with nitric oxide**

(30) Priority: 26.04.1996 AU PN9517/96
(71) Applicant: BOC GASES AUSTRALIA LIMITED, Chatswood, New South Wales 2067 (AU)
(72) Inventor: Cranston, Peter Michael, Castle Cove, New South Wales 2069 (AU)
(74) Representative: MacLean, Martin David

(57) **Abstract**

This invention relates to a process and apparatus for curing meat. The process comprises contacting the meat with gaseous nitric oxide preferably mixed with a substantially inert carrier gas such as carbon dioxide and/or nitrogen. The nitric oxide combines with myoglobin, haemoglobin or haem compounds in or from edible animal meat to form a colour complex.

## Description

The present invention relates to processes for curing meat or meat products, and to a gas therefor.

Salting as a means of meat preservation has been practised for 3,000 years. In the late 1800s, nitrate was used as a curing agent however it was not until the beginning of this century that it was realised that before there can be any curing effect, nitrate must be reduced to nitrite. While nitrite produces good colour in meat and has desirable preservative and anti-oxidative effects as well as the preferred cured aroma, nitrite is also responsible for the formation of carcinogenic N-nitrosamines in some cured products under certain processing conditions. These carcinogenic compounds are formed by a chemical reaction between the nitrosating agent and a secondary or tertiary amine. With respect to cured meat products, the nitrosating agents are formed from the added nitrite which react with amines (the products of protein degradation) in the meat.

it is an object of the present invention to provide a curing process for meat which eliminates or at least reduces the levels of added nitrite.

In a broad aspect, the present invention provides a process of curing meat or products thereof, comprising the step of combining gaseous nitric oxide with myoglobin, haemoglobin and haem compounds in or from edible animal meat.

In a first embodiment the gaseous nitric oxide is combined with the meat until a colour complex is formed. In another embodiment, the meat is cured with a mixture of gaseous nitric oxide and substantially inert carrier gas.

The carrier gas may be carbon dioxide or nitrogen. Preferably, the gaseous nitric oxide is present in an amount of 0.001-99.9 wt % most preferably 1-5 wt %.

While the present inventive method may be carried out using any conventional meat processing equipment, however, it is found to be particularly suitable when using modified atmospheric packaging. In a second aspect the present invention provides a process of curing meat or products thereof comprising:
a) placing the meat or meat products in a vessel
b) evacuating the vessel
c) at least partially filling the vessel with gaseous nitric oxide, and
d) maintaining contact between the meat or meat product and the nitric oxide to cure said meat or meat product.

In a third aspect, the present invention provides a gas for curing meat comprising 0.001-99.9 wt % nitric oxide mixed with a substantially inert carrier gas.

The present invention is a useful alternative to the current longstanding technology of using potassium and sodium salts of nitrite and/or nitrate. These salts break down in the meat by a reduction process mediated by a combination of meat or bacterial enzymes and by chemicals such as vitamin C or salts thereof, to generate nitric oxide in situ and hence the colour typically seen in cured meat or meat products.

However, this conventional method also leaves a nitrate or nitrite salt residue on the treated product and may adversely affect human health. For example, nitrites are known to combine with secondary amines to form nitrosamines which are believed to be carcinogenic. Thus, Australian government legislation for example currently permits a limit of 125 ppm residual nitrites.

The gaseous curing method of the invention ameliorates the need to keep the nitrite levels in check as little or no residual nitrites are formed in the final product. This can be achieved without sacrificing the appearance or quality as the method produces cured products with the colour and flavour characteristic of such meats.

Another advantage of the present invention is that no other additives need be used in the curing process, as the uptake of the gas by the meat myoglobin, haemoglobin and haem compounds in or from the meat need not be facilitated by a chemical mediator used in conventional processes. The latter often require the use of agents which include reducing agents, iron salts, ascorbic acids or the like in order to achieve the desired colour in the cured meat.
Thus, the present invention allows meat to be cured simply and inexpensively. The gaseous nitric oxide may be carried with another gas such as carbon dioxide and/or nitrogen and mixed with the meat to be cured by applying the gas through a conventional meat mixer, blender or massager modified to allow entry of the gas into the apparatus. A modified atmosphere packaging process however is the preferred method of curing.

The preferred embodiments of the present invention will now be described, by way of the following examples, and with reference to the following drawings. It should be understood, however, that these examples only serve to illustrate the present invention and should not be interpreted as limiting the scope of the invention in any way. In the drawings:
Figures 1-3 show the relationship between colour difference and exposure time for meat subjected to a first embodiment of a process in accordance with the invention, and
Figure 4 is a flow diagram of a second embodiment of a process in accordance with the invention.

As mentioned above, the present inventive process may be carried out using conventional meat processing equipment. In a preferred embodiment, the process is accomplished via a modified atmospheric packaging process.
In the experiments discussed below, the results of which are summarised in the Tables, eight intact *Biceps femoris* muscles (silverside flats) were received chilled (<5°C) individually packaged in shrink wrap. The samples were stored @ <5°C in the absence of light and on the day of receipt, the samples were defatted of visible surface adipose tissue by hand using a stainless steel knife. A single set of experimental samples (duplicate 6, 4, and 2 cm cubes) was cut from each intact muscle and the pH for each sample set was recorded. All eight sample sets were then placed inside a rotating drum massager along with a quantity of Universal brine without nitrate equivalent to 15 % of the weight of meat. The contents of the massager were rotated @ 6 rpm for 5 hours inside a chiller maintained at 4°C. On completion of this operation, each sample set was transferred using clean stainless steel tongs to multilayer vacuum bags (dimensions 400 mm X 200 mm). Sample sets were packaged such that each 6 cm cube was placed in a separate bag while the duplicate 4 and 2 cm cubes were bagged together. Each bag from the eight sample sets was subject to the following modified atmosphere gassing regime using a modified atmosphere packager:
1. Apply vacuum to remove air from bag;
2. Flush by filling bag with high purity nitrogen and re-apply vacuum;
3. Repeat step 2;
4. Fill bag with bottled pre-mix (5 % NO v/v in N₂ carrier) and heat seal.

After gassing, all sample bags were place inside the rotating drum massager and rotated @ 1 rpm inside a chiller operating at 4°C. Sample sets were removed after designated exposure time and immediately heat processed via steam cooking in a smokehouse with house temperature of 85°C, internal temperature of 70°C and of 99% relative humidity.

Following steam cooking, the samples were subject to a 60 minute cold water shower and then transferred to a chiller at <5°C. The pH of the chilled samples was recorded and then colour measurements of the samples were taken, using a tristimulus colour meter in the Hunter *L, a, b* colour space; for each of the samples, colour measurements were taken at its geometric centre ("GC") and on its outside surface ("OUT"). Measurements were taken by examining an internal cross section of the samples cut transverse to the orientation of the muscle fibres ("transverse cut") and parallel to the muscle fibres ("parallel cut").

The in bag gassing method exposed the sample cubes to the NO curing gas inside multilayer vacuum bags which were heat sealed. The gassing may be carried out either by mixing pure NO with a carrier gas or alternatively using a bottled pre-mix.

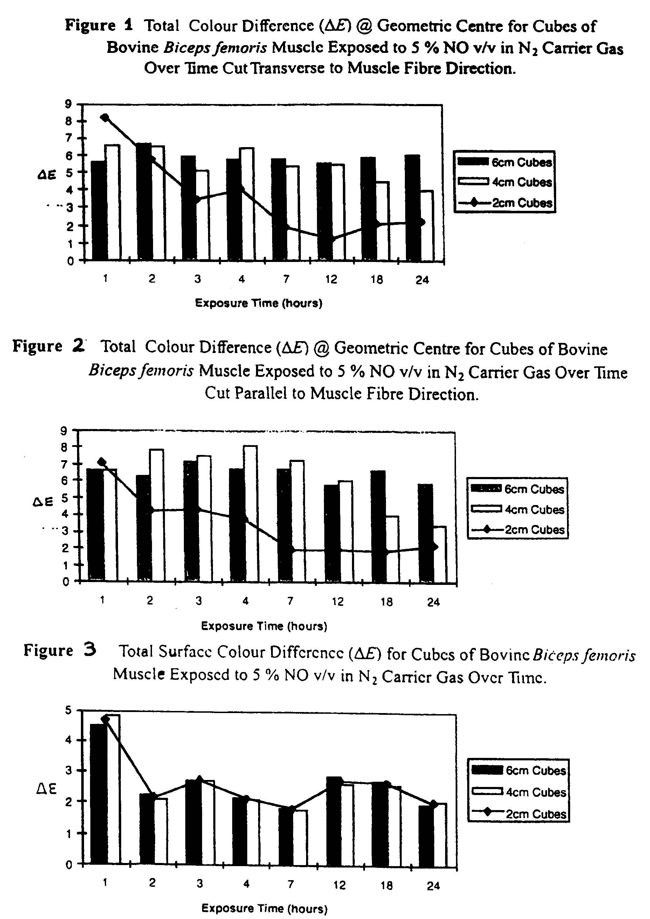

Sample sets were exposed to 5% NO v/v within N₂ carrier gas for periods of 1, 2, 3, 4, 7, 12, 18 and 24 hours. After the first trial, all experimental conditions were repeated in the second to obtain replicate data. The results for each replicate trial were in strong agreement for the parameters evaluated so the average of the replicate data is reported. The averaged raw data is presented under in Tables (a) to (h) below, and the averaged data in Tables 2 and 3; this data is shown graphically in Figures 1, 2 and 3. The extent of NO migration throughout the samples was denoted by the induced ring of cured pinkish-red colour which gradually increases toward the geometric centre until the point of complete curing (saturation).

### TABLES

### Table 1 - Colour Data 5% NO v/v in N₂ Carrier Gas Over Time-Average of Two Replicates

Colour measurements taken with a tristimulus colour meter in the Hunter L, a, b colour space, of the geometric centre (GC) and outer surface (OUT) of 6, 4 and 2cm sample meat cubes cut transverse to the orientation of muscle fibres (transverse cut) and parallel to the muscle fibres (parallel cut) after 1, 2, 3, 4, 7, 12, 18 and 24 hours. Colour measurement data used to establish a total colour difference (ΔE).

**Table 1(a)**

| After 1 Hour | | | | | | | | |
|---|---|---|---|---|---|---|---|---|
| | **Transverse Cut** | | | | **Parallel Cut** | | | |
| **Sample** | **L** | **a** | **b** | **Δ*E*** | **L** | **a** | **b** | **Δ*E*** |
| 6cm OUT | 44.775 | 15.735 | 5.895 | 3.890519 | 45.93 | 14.84 | 5.66 | 5.125696 |
| 6cm GC | 44.62 | 18.655 | 8.205 | 5.612439 | 47.23 | 17.405 | 7.365 | 6.653925 |
| 4cm OUT | 43.77 | 14.63 | 5.815 | 3.339077 | 42.25 | 15.695 | 5.99 | 1.923898 |
| 4cm GC | 46.655 | 14.53 | 6.84 | 6.584094 | 46.63 | 13.405 | 6.89 | 6.699607 |
| 2cm OUT | 44.02 | 15.595 | 7.1 | 3.715568 | 43.805 | 16.185 | 6.085 | 2.888994 |
| 2cm GC | 48.445 | 14.435 | 7.865 | 8.204808 | 46.95 | 13.785 | 7.815 | 7.087091 |

**Table 1(b)**

| After 2 Hour | | | | | | | | |
|---|---|---|---|---|---|---|---|---|
| | **Transverse Cut** | | | | **Parallel Cut** | | | |
| **Sample** | **L** | **a** | **b** | **Δ*E*** | **L** | **a** | **b** | **Δ*E*** |
| 6cm OUT | 43.665 | 16.525 | 5.485 | 2.561502 | 42.76 | 15.65 | 5.64 | 1.924278 |
| 6cm GC | 47.57 | 17.555 | 6.625 | 6.684319 | 46.405 | 19.025 | 7.59 | 6.328164 |
| 4cm OUT | 43.82 | 14.135 | 5.05 | 3.7829 | 44.65 | 16.095 | 5.625 | 3.621081 |
| 4cm GC | 46.825 | 14.835 | 6.985 | 6.458735 | 48.425 | 14.54 | 7.17 | 7.899665 |
| 2cm OUT | 43.28 | 16.52 | 6.665 | 2.679849 | 42.8 | 16.98 | 6.145 | 2.082422 |
| 2cm GC | 46.68 | 16.45 | 6.58 | 5.756316 | 44.93 | 17.65 | 6.6 | 4.295756 |

**Table 1(c)**

| After 3 Hour | | | | | | | | |
|---|---|---|---|---|---|---|---|---|
| | **Transverse Cut** | | | | **Parallel Cut** | | | |
| **Sample** | **L** | **a** | **b** | **Δ*E*** | **L** | **a** | **b** | **Δ*E*** |
| 6cm OUT | 43.145 | 14.955 | 5.805 | 2.670655 | 43.68 | 15.775 | 5.42 | 2.743097 |
| 6cm GC | 45.555 | 18.23 | 8.635 | 5.889186 | 47.815 | 17.375 | 7.5 | 7.171526 |
| 4cm OUT | 42.78 | 14.05 | 5.335 | 3.063478 | 46.00 | 15.33 | 5.895 | 5.100787 |
| 4cm GC | 45.00 | 15.385 | 7.675 | 5.116085 | 47.94 | 14.67 | 7.285 | 7.491468 |
| 2cm OUT | 43.185 | 16.055 | 6.07 | 2.494415 | 43.905 | 15.295 | 5.19 | 3.101809 |
| 2cm GC | 43.57 | 18.51 | 6.565 | 3.470006 | 45.055 | 17.515 | 6.375 | 4.323744 |

**Table 1(d)**

| After 4 Hour | | | | | | | | |
|---|---|---|---|---|---|---|---|---|
| | **Transverse Cut** | | | | **Parallel Cut** | | | |
| **Sample** | **L** | **a** | **b** | **Δ*E*** | **L** | **a** | **b** | **Δ*E*** |
| 6cm OUT | 42.91 | 16.57 | 6.105 | 2.223341 | 42.945 | 15.675 | 5.125 | 2.071675 |
| 6cm GC | 46.305 | 17.325 | 7.08 | 5.743505 | 45.955 | 19.215 | 8.03 | 6.744909 |
| 4cm OUT | 42.01 | 16.085 | 5.74 | 1.284541 | 42.76 | 15.87 | 5.42 | 2.019452 |
| 4cm GC | 46.62 | 14.72 | 7.15 | 6.441421 | 48.38 | 14.285 | 7.59 | 8.123874 |
| 2cm OUT | 42.525 | 16.255 | 5.8 | 1.822719 | 41.12 | 17.335 | 5.245 | 1.279493 |
| 2cm GC | 44.645 | 17.575 | 6.87 | 4.056509 | 44.625 | 17.135 | 6.33 | 3.748716 |

**Table 1(e)**

| After 7 Hour | | | | | | | | |
|---|---|---|---|---|---|---|---|---|
| | **Transverse Cut** | | | | **Parallel Cut** | | | |
| **Sample** | **L** | **a** | **b** | **Δ*E*** | **L** | **a** | **b** | **Δ*E*** |
| 6cm OUT | 42.68 | 16.735 | 5.735 | 1.881609 | 42.66 | 16.98 | 5.89 | 1.757056 |
| 6cm GC | 44.945 | 19.62 | 8.125 | 5.730303 | 45.21 | 20.13 | 9.085 | 6.752298 |
| 4cm OUT | 42.42 | 16.99 | 6.21 | 1.815608 | 42.045 | 16.805 | 4.86 | 2.204093 |
| 4cm GC | 44.32 | 16.92 | 6.31 | 5.363296 | 47.42 | 14.285 | 7.56 | 7.256254 |
| 2cm OUT | 42.18 | 16.36 | 5.76 | 1.338189 | 41.915 | 16.785 | 6.585 | 3.031116 |
| 2cm GC | 40.96 | 16.81 | 6.26 | 1.927815 | 41.56 | 15.665 | 6.555 | 1.940012 |

**Table 1(f)**

| After 12 Hour | | | | | | | | |
|---|---|---|---|---|---|---|---|---|
| | **Transverse Cut** | | | | **Parallel Cut** | | | |
| **Sample** | **L** | **a** | **b** | **Δ*E*** | **L** | **a** | **b** | **Δ*E*** |
| 6cm OUT | 44.125 | 15.64 | 5.54 | 3.229888 | 42.465 | 17.02 | 6.33 | 2.417139 |
| 6cm GC | 45.98 | 17.06 | 7.64 | 5.505891 | 46.56 | 17.03 | 7.225 | 5.826155 |
| 4cm OUT | 42.085 | 16.95 | 5.00 | 2.235863 | 41.98 | 17.315 | 6.23 | 1.878139 |
| 4cm GC | 43.03 | 17.065 | 6.14 | 5.397787 | 47.105 | 16.495 | 6.03 | 6.094303 |
| 2cm OUT | 41.315 | 17.565 | 5.835 | 2.013081 | 41.774 | 16.105 | 5.535 | 1.116571 |
| 2cm GC | 40.89 | 16.97 | 5.49 | 1.228428 | 40.5 | 17.995 | 5.545 | 1.969003 |

**Table 1(g)**

| After 18 Hour | | | | | | | | |
|---|---|---|---|---|---|---|---|---|
| | **Transverse Cut** | | | | **Parallel Cut** | | | |
| **Sample** | **L** | **a** | **b** | **Δ*E*** | **L** | **a** | **b** | **Δ*E*** |
| 6cm OUT | 43.64 | 15.47 | 6.47 | 3.022858 | 42.6 | 15.38 | 6.685 | 2.416836 |
| 6cm GC | 45.26 | 18.485 | 7.13 | 5.879881 | 47.225 | 17.165 | 6.49 | 6.6636 |
| 4cm OUT | 42.6 | 15.985 | 6.13 | 2.080067 | 41.265 | 16.655 | 6.19 | 2.059102 |
| 4cm GC | 45.16 | 17.7 | 6.365 | 4.456888 | 45.03 | 16.935 | 5.825 | 4.01903 |
| 2cm OUT | 38.955 | 17.505 | 5.375 | 2.645407 | 41.325 | 15.67 | 5.03 | 2.542055 |
| 2cm GC | 40.665 | 18.22 | 5.745 | 2.116222 | 41.66 | 17.055 | 5.94 | 1.812635 |

**Table 1(h)**

| After 24 Hour | | | | | | | | |
|---|---|---|---|---|---|---|---|---|
| | **Transverse Cut** | | | | **Parallel Cut** | | | |
| **Sample** | **L** | **a** | **b** | **Δ*E*** | **L** | **a** | **b** | **Δ*E*** |
| 6cm OUT | 41.53 | 17.36 | 6.25 | 1.782633 | 42.125 | 16.5 | 5.35 | 2.154841 |
| 6cm GC | 46.1 | 17.735 | 7.995 | 5.952986 | 45.63 | 16.82 | 7.66 | 5.90007 |
| 4cm OUT | 41.42 | 16.515 | 5.86 | 2.074388 | 41.245 | 14.31 | 5.195 | 2.299659 |
| 4cm GC | 42.545 | 17.47 | 5.67 | 3.925071 | 42.88 | 18.485 | 6.13 | 3.38192 |
| 2cm OUT | 41.02 | 16.22 | 5.23 | 2.098467 | 40.85 | 15.065 | 5.69 | 1.675283 |
| 2cm GC | 39.55 | 17.99 | 5.42 | 2.208232 | 39.935 | 18.305 | 5.54 | 2.177263 |

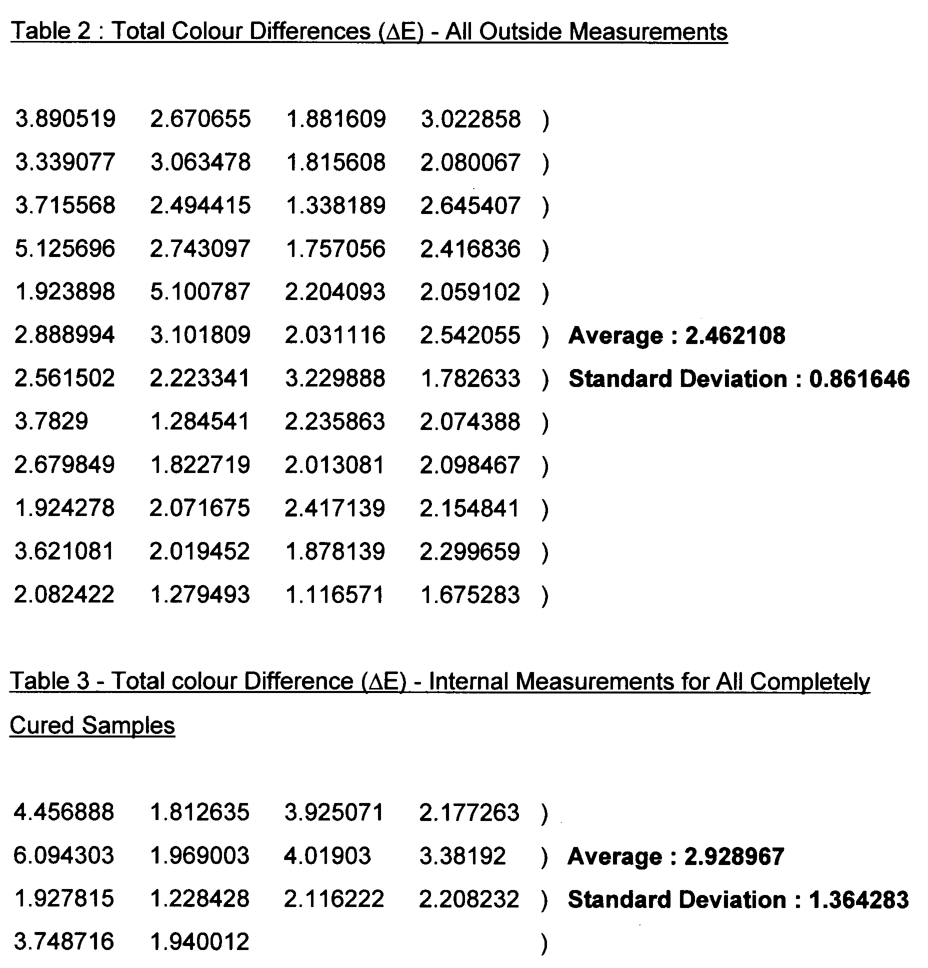

One surprising advantage of the present inventive method arises from the ability to control curing rates due to the relationship between muscle fibre orientation and rate of NO penetration in a given direction. Data was collected in this respect by examining an internal cross section of the finished samples cut with reference to the directional orientation of the muscle fibres.

It was evident from visual examination of the samples and from the data in the Tables that NO penetration eventually occurred at a slightly elevated rate when travelling in a direction parallel with that of muscle fibres.

Migration of NO to the geometric centre of the 2 cm cubes occurred between 3 and 4 hours in the direction parallel with muscle fibres while the equivalent point was reached between 7 and 12 hours in the transverse direction. Similar trends were observed in the 4 cm cubes where penetration times to the geometric centre of between 7 and 12 hours and 12 to 18 hours for the two cuts, respectively were obtained.

As previously performed in earlier experiments, the colour of the treated samples was analysed in the Hunter L, a, b colour space and the data used to establish a total colour difference (Δ*E*). The penetration data for the samples showed good correlation with the internal colour data. Figures 1 and 2 illustrate that the strongest correlation existed for the 2 cm cubes and that similar trends were experienced for the respective cuts. As the penetration depth of NO increased within the samples, the internal colour difference similarly decreased. While this relationship was most significant in the 2 cm sample cubes, the same trends were observed in the larger 4 cm cubes to a proportionally less extent. It was anticipated that any colour difference observed on the surface of the samples would be consistent although as shown in Figure 3 some variation did occur.

A noticeable trend observed was the uniformity of Δ*E* experienced for the three levels of sample cube volume at any given time of exposure.

An attractive feature of this aspect of the present invention is it allows an operator to predict and apply appropriate curing times. The suitable curing time can be determined by consideration of a number of factors including size of product to be cured (in particular its thickness), NO content and muscle orientation.

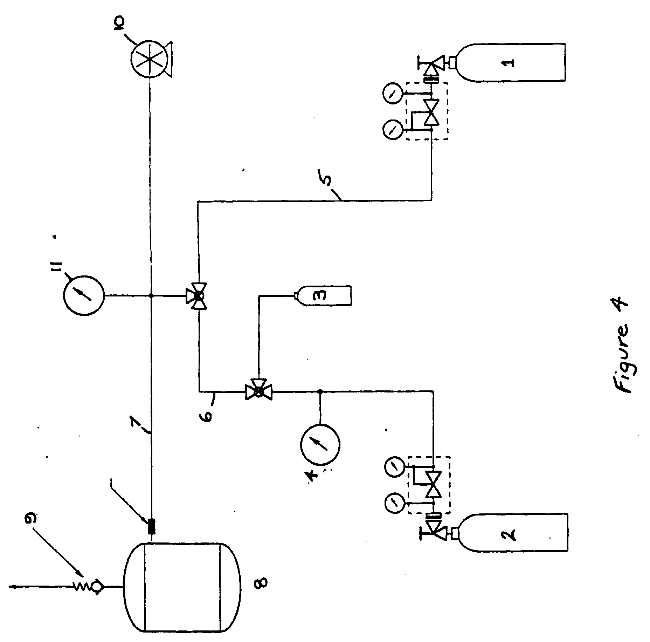

The present inventive process is also suitable for use in a vacuum massager as shown in Figure 4.

This apparatus comprises a carrier gas cylinder 1, nitric oxide cylinder 2, nitric oxide dose cylinder 3 connected to nitric oxide cylinder 1. A dose cylinder pressure gauge 4 regulates the pressure in the nitric oxide dose cylinder 3.

A line 5 extends from the carrier gas cylinder to join a line 6 from the nitric oxide dose cylinder 3 for feeding via line 7 to the vacuum massager 8. A safety release valve 9 is connected to the vacuum massager 8. A vacuum pump 10 is also connected to the vacuum massager with pressure gauge 11 monitoring the pressure in the vacuum massager 8.

This apparatus operates as follows:

Firstly, the meat to be cured is pumped to a level of 25 +/- 2% w/w with Universal brine # 1710 without added nitrite (phosphate, salt, sugar and ascorbate blend). This pumping may be performed by a multiple needle injector or any other suitable apparatus. Then, the vacuum massager 8 is evacuated using vacuum pump 10. Preferably, the vessel is then flushed using high purity nitrogen. This evacuation/flush process may be repeated if desired. The vacuum massager 8 is then filled with the desired quantity of nitric oxide/carrier gas curing mixture. This may be accomplished by adding the carrier gas first and then the desired amount of pure nitric oxide, or alternatively by providing a prepackaged nitric oxide/carrier gas mix. Finally, the meat or meat products are agitated in the vacuum massager 8 to provide for the desired gas penetration.

After the predetermined curing time, the meat or meat products are removed from the vacuum massager, bagged or vacuum sealed and steam cooked in line with conventional processing.

In an alternative embodiment, following bagging and sealing of the cured meat products, the packaged meat/meat product may be microwave cooked. This is particularly advantageous with the in-bag gassing procedure. In this procedure, the meat or meat products may be placed in the bag, cured, in accordance with the inventive process, sealed and then cooked. This process is not only extremely fast (ie down to minutes as opposed to hours for a conventional cure/cook process), but also avoids handling which in turn reduces the possibility of bacterial transmission to the meat or meat product. Also, such a rapid cure/cook process is extremely effective in eliminating any bacteria or micro-organisms on the meat or meat products.

The present inventive process provides a viable alternative to nitrite curing of meat which is simple to use, can cure meat or meat products substantially faster than conventional processing and provides for a product with less residual nitrosamines.

It is suitable for all meats or meat products but particularly those with a high specific surface area eg thin sliced meats.

## Claims

1. A process of curing meat or products thereof, comprising the step of combining gaseous nitric oxide with myoglobin, haemoglobin and haem compounds in or from edible animal meat.

2. A process as claimed in Claim 1 wherein a colour complex is formed.

3. A process as claimed in Claim 1 wherein the meat is contacted with a combination of gaseous nitric oxide and a substantially inert carrier gas.

4. A process of curing meat or products thereof comprising:
a) placing the meat or meat products in a vessel
b) evacuating the vessel
c) at least partially filling the vessel with gaseous nitric oxide, and
d) maintaining contact between the meat or meat product and the nitric oxide to cure said meat or meat product.

5. A process as claimed in Claim 4 wherein prior to step c) said vessel is purged with nitrogen.

6. A process as claimed in Claim 4 or Claim 5 wherein in step c) the vessel is filled with a mixture of gaseous nitric oxide and a substantially inert carrier gas.

7. A process as claimed in Claim 4 or Claim 5 or Claim 6 wherein during step d) the meat or meat product is agitated.

8. A process as claimed in Claim 3 or Claim 6 or Claim 7 when dependent on Claim 6 wherein the substantially inert carrier gas is carbon dioxide or nitrogen.

9. A process as claimed in Claim 8 wherein the gaseous nitric oxide is present in an amount of 0.001-99.9 wt % in the substantially inert carrier gas.

10. A process as claimed in Claim 9 wherein the gaseous nitric oxide is present in an amount of 1-5 wt % in the substantially inert carrier gas.

11. A process as claimed in Claim 4 or in any of Claims 5 to 10 when dependent on Claim 4 wherein the vessel is a bag.

12. A process as claimed in Claim 4 or in any of Claims 5 to 10 when dependent on Claim 4 wherein the vessel is a vacuum massager.

13. A gas for curing meat comprising 0.001-99.9 wt % nitric oxide mixed with a substantially inert carrier gas.

14. A gas as claimed in Claim 13 wherein the gaseous nitric oxide is present in an amount of 1-5 wt %.

15. A gas as claimed in Claim 13 or Claim 14 wherein the substantially inert carrier gas is carbon dioxide or nitrogen.
